# EUROPÄISCHE PATENTANMELDUNG

(11) **EP 0 623 390 A1**
(43) Veröffentlichungstag der Anmeldung: **09.11.1994**
(21) Anmeldenummer: 94106540.1
(22) Anmeldetag: 27.04.1994
(51) Int. Cl.: B03B 9/06

(54) **Verfahren und Anlage zur mechanischen Aufbereitung von Abfallgemischen**

(30) Priorität: 05.05.1993 DE 4314759
(71) Anmelder: Klöckner-Humboldt-Deutz Aktiengesellschaft, D-51149 Köln (DE)
(72) Erfinder: Cordes, Thomas, Dr., D-51491 Overath (DE); Wegner, Horst, D-51467 Bergisch Gladbach (DE); Thomas, Alfons, D-50969 Köln (DE)

(57) **Zusammenfassung**

Bei der mechanischen Aufbereitung von metallischen und nichtmetallischen Teilen enthaltenden Abfallstoffen, insbesondere von Geräteschrott mit elektrischen und/oder elektronischen Bauteilen mit dem Ziel der Gewinnung verwertbarer Produkte mit trockenen Zerkleinerungs- und Sortierstufen wird eine hohe Selektivität der abgetrennten Produkte erreicht, wenn gemäß der Erfindung nach der trockenen Vorbehandlung eine nasse Sortierung anschließt, wobei bei trockener Vorbehandlung anfallendes Feingut einem Schwingherd (17) und anfallendes Grobgut einer Naßsetzmaschine (16) zugeführt werden.

## Beschreibung

Die Erfindung ist auf ein Verfahren zur mechanischen Aufbereitung von metallische und nichtmetallische Teile enthaltenden Abfallstoffen, insbesondere von Geräteschrott mit elektrischen und/oder elektronischen Bauteilen, die zerkleinert und mehrstufig sortiert werden, gerichtet.

Verfahren zur mechanischen Aufbereitung derart komplex zusammengesetzter Abfälle, die eine Vielzahl von Werkstoffen unterschiedlicher Zusammensetzung und unterschiedlicher Verteilung enthalten, mit dem Ziel, verwertbare Inhaltstoffe einer Wiederverwendung zuzuführen, sind bekannt.

So beschreibt die EP-A-0 403 695 ein Verfahren und eine Anlage zur Verwertung von Geräteschrott, bei dem stufenweise abwechselnd zerkleinert, magnetisch und mechanisch physikalisch, z. B. mittels elektrostatischer Separatoren, separiert wird, wodurch eine magnetische und eine nichtmagnetische Metallmischfraktion erhalten wird, die zur naßchemischen und/oder elektrolytischen weiteren Trennung geeignet ist, und ferner eine deponiefähige nichtmetallische Mischfraktion abgetrennt wird.

Eine weitere Auftrennung der verwendbaren Inhaltstoffe wird in der EP-A-0 524 396 beschrieben, und zwar wird in dem hier beschriebenen Verfahren durch die Kombination und Hintereinanderschaltung verschiedener Klassier-, Magnetscheide- und Wirbelscheidestufen sowie den Einsatz von Luftherden neben einem Eisenprodukt, einem Nichtmetallprodukt und einem Nichteisenmetall-Mischprodukt ein kupferhaltiges Mischprodukt erhalten, das mit Edelmetallen angereichert ist.

Neben diesen obengenannten Verfahren, die ausschließlich eine trockene Aufbereitung beschreiben, ist aus der DE-A-41 00 346 ein Verfahren zur mechanischen Aufbereitung von unsortiertem Geräteschrott bekannt, bei dem in drei Stufen in vorgenannter Weise trocken durch Zerkleinerung, Klassierung, Magnetscheidung, Elektrostatikscheidung und Wirbelstromscheidung verschiedene Eisenfraktionen und Nichteisenmetallfraktionen gewonnen sowie ein Mischgut erhalten wird, das auf kleiner 100 µm vermahlen und naß mit Hilfe eines Stoßherdes in eine weitere Nichteisenmetallfraktion und in eine Kunststofffraktion aufgetrennt wird.

Nachteilig bei den genannten bekannten trockenen Verfahren ist, daß trotz des beschriebenen hohen Prozeßaufwandes keine trennscharfe Produkttrennung, insbesondere in den Grobfraktionen der Nichteisenmetalle, möglich ist und auch das genannte Naßverfahren, bei dem auf kleiner 100 µm zerkleinertes Produkt einem Stoßherd aufgegeben wird, mit Schwierigkeit aufgrund der hohen Feinheit bei der erforderlichen Entwässerung zu rechnen ist. Weiterhin werden für eine selektive Trennung durch eine Stoßherdsortierung mit zunehmender Feinheit der Aufgabekörnung höhere Dichteunterschiede der zu trennenden Stoffe erforderlich, so daß bei der genannten Feinheit von kleiner 100 µm eine Mehrproduktentrennung schwierig ist.

Es ist Aufgabe der Erfindung, ein Verfahren und eine Anlage zur mechanischen Aufbereitung von Abfallstoffen der genannten Art zu schaffen, das bzw. die betriebssicher unter Vermeidung der genannten Nachteile eine selektive Produkttrennung, insbesondere in unterschiedliche Nichteisenmetallfraktionen ermöglicht.

Die gestellte Aufgabe wird verfahrensmäßig gelöst mit den Maßnahmen des Kennzeichnungsteils des Anspruchs 1 und anlagenmäßig mit den Merkmalen des Kennzeichnungsteils des Anspruchs 6.

Vorteilhafte Ausgestaltungen der Erfindung sind in den Unteransprüchen angegeben.

Durch die erfindungsgemäße Anwendung von nach der Dichte trennenden an sich bekannten nassen Sortierstufen, wobei aus einer vorhergehenden trockenen Vorbehandlung erhaltendes Feingut beispielsweise der Körnung kleiner 3 mm ein Schwingherd (Stoßherd oder Schüttelherd) und für erhaltendes Grobgut, beispielsweise der Körnung kleiner 30 mm, eine Naßsetzmaschine zum Einsatz kommen, wird das zuvor in der trockenen Vorverhandlung zerkleinerte und von eisenhaltigen Inhaltstoffen durch Magnetscheidung weitgehend befreite Abfallstoffgemisch betriebssicher selektiv in verschiedene Fraktionen getrennt, wobei insbesondere auch die Nichteisenmetallfraktionen in unterschiedliche Fraktionen aufgetrennt werden, beispielsweise in eine kupferreiche und in eine aluminiumreiche Fraktion.

Je nach Herkunft und damit Gehalt und Zusammensetzung der Abfallstoffe kann es dabei erfindungsgemäß von Vorteil sein, bei der Herd- bzw. Setzmaschinensortierung anfallendes Mittelgut zum weiteren Aufschluß zu einer Vorbehandlungsstufe zurückzuführen oder beispielsweise auch zwei Setzmaschinen hintereinander anzuordnen.

Weitere Einzelheiten, Merkmale und Vorteile der Erfindung ergeben sich aus den nachfolgenden Erläuterungen zu einem in einer Zeichnungsfigur schematisch dargestellten Verfahrensschema einer beispielhaften Anlage gemäß der Erfindung.

Das mechanisch aufzubereitende Abfallgemisch (9) wird zunächst trocken in einer Zerkleinerungseinrichtung (10), beispielsweise einer Hammermühle, vorzerkleinert, beispielsweise durch einen entsprechenden Sieb- oder Rosteinsatz auf eine Körnung beispielsweise von d₅₀ = 10 mm bzw. d₈₀ = 18 mm. Dieses vorzerkleinerte Mischgut wird zu einem Magnetscheider (11) zur Abtrennung einer Eisenfraktion (7) und daran anschließend einem Wirbelstromscheider (12) zur Abtrennung einer Nichteisenmetallfraktion (6) aufgegeben. Das verbleibende metallabgereicherte Gemisch wird nun in einer zweiten Zerkleinerungseinrichtung (13), beispielsweise einer Hammermühle, weiterzerkleinert, beispielsweise auf eine Körnung von d₅₀ = 3,5 mm bzw. d₈₀ = 5,8 mm, und daran anschließend einem weiteren Magnetscheider (14) zur Abtrennung einer weiteren, nun freigelegten Eisenfraktion (4). Nun erfolgt eine Klassierung der weitgehend eisenfreien Restfraktion, beispielsweise durch ein Sieb (15) bei einer beispielhaften Trennkorngröße von 2,8 mm, wobei ein Feingut (19) mit einer Körnung von beispielsweise d₅₀ = 0,5 mm bzw. d₈₀ = 1,2 mm und ein Grobgut (20) mit einer Körnung von beispielsweise d₅₀ = 4,5 mm bzw. d₈₀ = 6,2 mm erhalten wird.

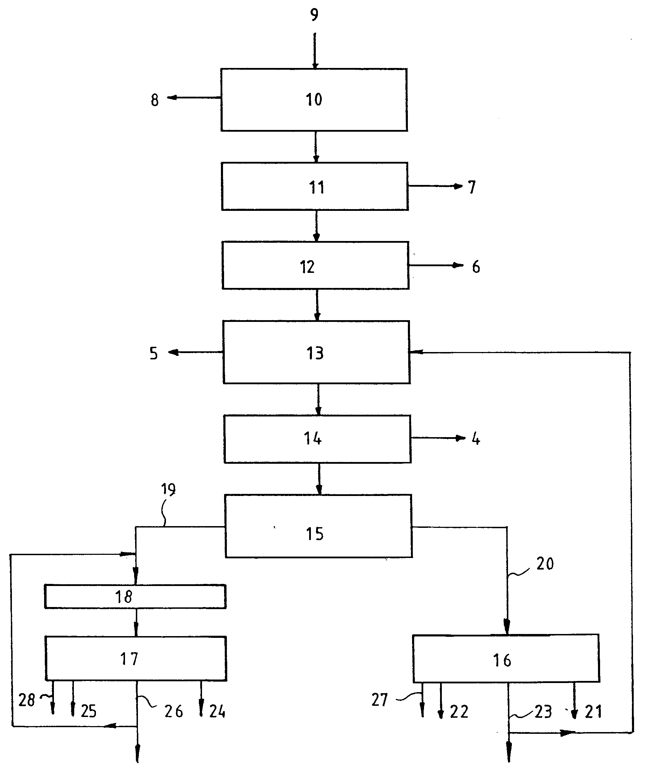

Das Feingut (19) wird nun direkt einem Schwingherd (17), der ein Stoßherd oder ein Schüttelherd sein kann, aufgegeben oder es wird zunächst in einer Vorrichtung (18) zur Verkugelung länglicher Metallteile wie beispielsweise Drähte zugeführt. Mit Vorteil hat sich hier eine Schlagnasenmühle bewährt. Auf dem Schwingherd (17) findet nun auf nassem Wege eine Trennung nach der Dichte mit hoher Selektivität statt, wobei mehrere Produkte unterschiedlicher Dichte voneinander getrennt werden. Im beschriebenen Anlagenbeispiel sind dies zwei Nichteisenmetallfraktionen (25, 28) mit angereichertem Aluminium bzw. Kupfergehalten, ein leichtgut (24) und ein Mittelgut (26). Je nach seiner Zusammensetzung stellt diese Mittelgut (26), genau wie die Produkte (25 und 28), ein Fertigprodukt dar, das zur weiteren Verwendung aus der Anlage ausgetragen werden kann oder aber es wird zum weiteren Aufschluß zu einer Vorbehandlungsstufe (in der Zeichnung nicht dargestellt), beispielsweise der Zerkleinerungsstufe (13) oder aber der Vorrichtung (18) zugeführt.

Das Leichtgut (24), das neben Kunststoffe auch Anteile an Glas und Keramik, die infolge ihres Sprödbruchverhaltens im Feingut angereichert sind, enthält, kann nun aus der Anlage ausgeschleust oder zur weiteren Auftrennung einer in - der Zeichnungsfigur nicht dargestellten - Sortierzentrifuge zugeführt werden.

Das bei der Klassierung erhaltende Grobgut (20) wird einer an sich bekannten Naßsetzmaschine (16) aufgegeben und auf nassem Wege durch Setzarbeit nach der Dichte in verschiedene Produkte getrennt. Auch bei diesem Sortierverfahren ergeben sich mit hoher Selektivität Produktgemische unterschiedlicher Dichte, und zwar beispielsweise zwei Nichteisenmetallfraktionen (27, 22), ein Mittelgut (23) und ein Leichtgut (21). Auch bei dieser Sortierstufe kann das Mittelgut (23) aufgrund seiner Zusammensetzung als ein verwendbares Fertiggut vorliegen, es kann aber auch zu einer Vorbehandlungsstufe, beispielsweise der Zerkleinerungsvorrichtung (13) zum weiteren Aufschluß zugeführt werden. Das in der Naßsetzmaschine (16) abgetrennt Leichtgut (21), das in der Hauptsache aus Kunststoffanteilen besteht, kann, genau wie das Leichtgut (24) des Schwingherdes (17), einer Sortierzentrifuge (in der Zeichnungsfigur nicht dargestellt) zur weiteren Auftrennung zugeführt werden, wobei die beiden Leichtgüter (24 und 21) gemeinsam in einer Sortierzentrifuge oder getrennt in verschiedenen Sortierzentrifugen sortiert werden.

Wie bereits gesagt, zeichnet sich die nasse Trennung mit Hilfe einer Naßsetzmaschine gegenüber der trockenen Trennung, beispielsweise durch Wirbelstromscheidung, durch höhere Trennschärfe und durch die Möglichkeit einer Mehrprodukttrennung aus. Es ist deshalb in vorteilhafter Weise entsprechend der Erfindung möglich, die im beschriebenen Anlagenbeispiel dargestellte Nichteisenmetallabtrennung mit einem Wirbelstromscheider (12) durch eine weitere Setzmaschine zu ersetzen. Anstelle des bei der Wirbelstromscheidung erhaltenden Mischproduktes (6) werden dann durch geeignete Austragsvorrichtungen grobstückige Kupfer- und Aluminiumprodukte als Schwergüter und beispielsweise ein aus Platinenbruchstücken, die vorwiegend mit Kupfer beschichtet sind bestehendes Mittelprodukt ausgetragen. Die in der Anlage dargestellte an der Wirbelstromscheidung anschließende Zerkleinerung [Zerkleinerungseinrichtung (14)] sowie Klassierung [Klassiervorrichtung (15)] werden in diesem Fall dann nicht mehr trocken, sondern feucht bzw. naß erfolgen.

## Patentansprüche

1. Verfahren zur mechanischen Aufbereitung von metallische und nichtmetallische Teile enthaltenden Abfallstoffen, insbesondere von Geräteschrott mit elektrischen und/oder elektronischen Bauteilen, die zerkleinert und mehrstufig sortiert werden, dadurch gekennzeichnet, daß nach einer zunächst trockenen Vorbehandlung mit mindestens einer Zerkleinerungsstufe und mit mindestens einer Sortierstufe zur Metallabtrennung eine nasse Weiterbehandlung erfolgt, bei der anfallendes Grobgut (20) mindestens einer Naßsetzmaschine (16) und anfallendes Feingut (19) mindestens einem Schwingherd (17), der ein Stoßherd oder ein Schüttelherd sein kann, zur weiteren Sortierung aufgegeben wird.

2. Verfahren nach Anspruch 1, dadurch gekennzeichnet, daß ein bei der Naßsetzmaschine (16) anfallendes Mittelgut (23) zu einer Vorbehandlungsstufe zurückgeführt wird.

3. Verfahren nach Anspruch 1 oder 2, dadurch gekennzeichnet, daß dem Schwingherd (17) eine Vorrichtung (18) zur Verkugelung länglicher Metallteile, beispielsweise Drähte, vorgeschaltet wird.

4. Verfahren nach Anspruch 3, dadurch gekennzeichnet, daß das bei der Schwingherdsortierung anfallende Mittelgut (26) der Vorrichtung (18) zur Verkugelung länglicher Metallteile zugeführt oder zu einer Vorbehandlungsstufe zurückgeführt wird.

5. Verfahren nach Anspruch 1, 2, 3 oder 4, dadurch gekennzeichnet, daß zwei Setzmaschinen mit zwischengeschalteter Zerkleinerung und Klassierung hintereinander angeordnet sind.

6. Verfahren nach einem oder mehreren der vorhergehenden Ansprüche, dadurch gekennzeichnet, daß das bei der Herdsortierung und/oder das bei der Setzmaschinensortierung abgetrennte Leichtgut in einer Sortierzentrifuge in weitere Fraktionen nach ihrer Dichte aufgetrennt wird.

7. Anlage zur Durchführung des Verfahrens nach einem oder mehreren der vorhergehenden Ansprüche mit aus mindestens einer Zerkleinerungsvorrichtung, beispielsweise einer Hammermühle (10), und mindestens einer Sortiervorrichtung, beispielsweise einem Magnetscheider (11), bestehenden trockenen Vorbehandlungsstufen, dadurch gekennzeichnet, daß der letzten Vorbehandlungsstufe eine Klassiervorrichtung (15) nachgeschaltet ist, deren Feingutaustragsvorrichtung (19) mit der Aufgabevorrichtung eines Schwingherdes (17) und dessen Grobgutaustragsvorrichtung (20) mit der Aufgabevorrichtung einer Naßsetzmaschine (16) verbunden sind.

8. Anlage nach Anspruch 7, dadurch gekennzeichnet, daß zwischen der Feingutaustragsvorrichtung der Klassiervorrichtung (15) und dem Schwingherd (17) eine Vorrichtung (18) zur Verkugelung länglicher Metallteile, beispielsweise eine Schlagnasenmühle, angeordnet ist.
